# EUROPEAN PATENT APPLICATION

(11) **EP 4 252 513 A1**
(43) Date of publication of application: **04.10.2023**
(21) Application number: 22166036.8
(22) Date of filing: 31.03.2022
(51) Int. Cl.: A01C 5/02, A01B 1/20, A01B 1/06

(54) **PLANTING PREPARATION TOOL**

(71) Applicant: Kellfri AB, 532 40 Skara (SE)
(72) Inventor: GREVELIUS, Hans, 223 62 Lund (SE)
(74) Representative: Bergenstråhle & Partners AB

(57) **Abstract**

Planting preparation tool (1) for preparation of soil at a planting area. The planting preparation tool (1) comprises a first drilling device (10) arranged at a first end (2) of the planting preparation tool (1) and having an extension (I) along a central longitudinal axis (X) and a drilling diameter (d). The planting preparation tool (1) further comprises at least one soil preparation device (20) arranged at a first distance (a) from the first end (2). The soil preparation device (20) extends a second distance (b) out from the central longitudinal axis (X), wherein the second distance (b) exceeds half the drilling diameter (d) of the first drilling device (10). The soil preparation device (20) comprises at least one cultivator device (21, 21a) arranged for engagement with at least the soil surface at the planting area upon rotation of the planting preparation tool (1).

## Description

### Technical field

The present invention relates to a planting preparation tool for preparation of soil at a planting area, for example when about to plant tree plants and other kinds of plants.

### Technical background

When planting for example tree plants, it is of great importance to find planting points of good quality. In the description below, the field of invention is exemplified by preparation of soil before tree planting but may of course include preparation of soil in connection to planting of other plants. A tree planter's task is to set the intended number of plants per hectare and always use the best planting points within a reasonable distance from surrounding plants. As a rule, the quality of the planting point is given priority over an even distribution of the individual tree plants. On most soils, good planting points mean that the soil preparation is fairly new, that soil covers the area around the plant and that it is at least 10 cm to the untouched humus edge. This is also applicable when planting trees, but the distance to the untouched humus edge is normally preferred to be greater than 10 cm, for example up to 20 - 30 cm. When these basic requirements are met, vermin like the pine weevil are less likely to damage the tree plant since they do not like the lack of humus in the vicinity of the plant, since it avoids being exposed to sunlight and heat and instead prefers cool and moist environment. Further, competing vegetation is kept away during the initial establishment phase and the temperature climate in the surrounding soil and air becomes more favorable. Preferably, planting should be done during the first vegetation period of the year and the planting point should not be at the bottom of pits or furrows but at the level of or slightly higher than the surrounding soil. In this way, it is avoided that the plant is left standing in water during the spring and the plant's root growth is facilitated by looser soil. For nutrient availability, the root system should be close to embedded humus. Thus, the newly planted plant can maintain a good nutritional status during the first vegetation period and grow more in the following years.

For large scale planting, the area which is intended for planting trees is normally prepared by large machines which prepares the soil by removing the upper layer of soil and competing vegetation. This is normally done by creating furrows or points with some kind of cultivating or soil preparation tool mounted on a machine like a tractor or the like. After the soil has been prepared, a planting tool is used to plant the individual tree plants. Planting tools may be drills, by which bore holes are created in which the plants are positioned, simple spades which creates the planting holes, special tools where each tool is loaded with a tree plant and which tool is pressed into the soil and expanded to create the planting hole, in which the tree plant is planted, etc.

For small scale planting or planting at small areas into the woods, etc., it is not suitable to use large machines for preparing the soil for planting. Large machines may damage the ground and may be expensive to use for small scale planting or for complementing with plants after storms or pest infestation. Further, many planting areas (both large and small) needs to be complemented with plants after a while since not all plants survive the first year/years, why it is of interest to use a method and tools to avoid damaging of the plants which have survived the first year/years. For this type of planting preparation, normally motor driven handheld tools are used, where a combination of different kinds of handheld cultivators, soil drills, etc. are used. The motor causes a rotation of a cultivator to facilitate the cultivation of the surface at the planting point and after this, a motor or hand driven soil drill or any other of the above presented tools is used to make the planting hole. Known planting preparation methods for small areas normally demands at least two different tools to prepare the soil which is time-consuming and drives the need of several tools and thereby cost and increases workload. There is a need of a new and better tool which takes care of the problems of prior art.

A complete other plant preparation method is to use a degradable soil cover, which is positioned around the plant when planted according to known methods and with known tools. The cover has an extension around the plant and prevent competing vegetation from establishment near the plant, but this is a quite costly and time-consuming way of protecting the plant from surrounding vegetation and vermin.

### Summary of the invention

One object of the present invention is to provide a planting preparation tool which solves the above-described problems, which are solved by an inventive planting preparation tool according to the independent claim 1.

According to an aspect, a planting preparation tool for preparation of soil at a planting area, is disclosed. The planting preparation tool comprises a first end and an opposite second end and having an elongate extension between the first end and second end, along a central longitudinal axis. The first end is intended to contact the soil at a planting area and the second end is arranged for connection to an arrangement able to cause a rotation of the planting preparation tool around the central longitudinal axis, preferably a handheld motor-driven tool or the like. The planting preparation tool comprises a first drilling device, arranged at the first end of the planting preparation tool, wherein the first drilling device has an extension along the central longitudinal axis, from the first end towards the second end, and the first drilling device has a drilling diameter perpendicular relative the central longitudinal axis. The planting preparation tool further comprises at least one soil preparation device, arranged at a first distance from the first end of the planting preparation tool, such that at least a part of the first drilling device is arranged between the first end and the soil preparation device, which means that the soil preparation device may be arranged directly after the first drilling device, above the same, or between the ends of the first drilling device (such as the first drilling device extends above the soil preparation device). The soil preparation device extends a second distance out from the central longitudinal axis, wherein the second distance exceeds half the drilling diameter of the drilling device. The soil preparation device comprises at least one cultivator device arranged for engagement (scratching, harrowing) with at least the soil surface at the plating area upon rotation of the planting preparation tool, to get rid of competing vegetation and humus.

Such a planting preparation tool eliminates the need of using two different tools which saves time and cost and is very suitable for at least small-scale planting preparation of the soil at the planting area when planting for example tree plants. The planting preparation tool combines the drill, which drills a hole for the plant and the soil preparation device is either fixed or removably fixed at the tool at a distance from the drill end / tool end, such as a cultivation of the surface soil around the hole occurs when a determined drilled hole is reached. The soil preparation device extends out from the central longitudinal axis of the tool, that is more or less radially outwards from the tool, such as this distance exceeds half the drilling diameter / the radius of the drilling device. A preferred radius of the soil preparation device may be about 20 cm. Since the soil preparation device comprises at least one cultivator device which engages by scratching / harrowing the soil surface at least outside the hole made by the drill, upon rotation of the planting preparation tool, the ground surface gets cultivated simultaneously as the drilled hole in the ground reaches a determined depth. The inventive planting preparation tool provides a cost-efficient, handheld and time-saving tool which is not known in prior art. Further, the inventive tool provides less impact on the local environment since most of the soil at the planting site is left without cultivation, for example if compared to large areas/furrows are created by large cultivation machines. The tool is best suited for small-scale planting, for example when complementing with plants after some years or after storm or vermin damages, and by using this planting preparation tool, minor soil damage is achieved which benefits both the plants and animal life. In total, the effect of using such tool means saving of energy and natural values, wherein sustainability increases.

According to an embodiment, the soil preparation device has a ring-shape and comprises a central hub arranged at the central longitudinal axis and a rim arranged at the second distance from the central longitudinal axis, wherein the at least one cultivator device extends between the hub and the rim.

According to an embodiment, the cultivator device of the soil preparation device comprises a plurality of teeth arranged spaced apart along the cultivator device, along at least a part of the second distance between the hub and the rim, wherein the plurality of teeth protrudes from the cultivator device in the axial direction, in direction towards the first end of the planting preparation tool. This means that the teeth protrude downwards, in direction towards the soil which is to be cultivated. The teeth may have different shapes, length, width, etc. within the scope of the invention.

According to an embodiment, a second drilling device is arranged at the first end of the planting preparation tool, wherein the second drilling device extends from the first end away from the first drilling device along the axial direction, such as forming an outermost end opposite the second end of the planting preparation tool. This second drilling device is a part of the tool and protrudes in front of the first drilling device, in direction towards the soil, like a pre-drill, for setting the bore hole in the ground more precisely and further indicates if there is a stone or rock, a root or other obstacle, at the intended location. Another advantage is that this second drilling device makes the drilling operation by the first drilling device more stable since it helps guiding the first drilling device during operation. This second drilling device further reduces oscillations and shaking which contributes to good ergonomics.

According to an embodiment, the planting preparation tool further comprises an elongate shaft which extends between the first end and the second end of the planting preparation tool, wherein the first drilling device is arranged at the first end of the shaft and the soil preparation device is arranged at the shaft between the first drilling device and the second end of the planting preparation tool. Preferably, both the first drilling device as well as the second drilling device and the soil preparation device all are arranged at the shaft in a removably manner, for example fixed around the shaft in a removable manner. Such a solution provides an easy way of changing the different parts irrespective of each other. For example, if the first drilling device is worn and needs to be replaced or sharpened, it is possible to remove the first drilling device and so on.

According to an embodiment, the at least one cultivator device of the soil preparation device is a bar, preferably an angled bar, which extends between the hub and the rim. For some applications it might be enough to only have a simple bar or the like, for cultivating the upper layer of the soil, which by that works as a blade which engages with the surface layer of the soil. This is a simple and cost-efficient solution of the cultivator device. In this case, the soil preparation device may have one or more such cultivator devices wherein the soil preparation device has the look of a rim with one or more spokes. The bar may be any kind of bar to function as a "scratching blade" and an angled bar is a more robust type of bar compared to a flat or round bar, why an angled bar may be preferred.

According to an embodiment, a length of each tooth of the plurality of teeth increases in direction away from the central longitudinal axis. This means that a tooth close to the longitudinal axis (close to the hub/the shaft) is short and that teeth positioned further away from the longitudinal axis is longer. The length preferably increases stepwise tooth by tooth but of course this could be done pairwise (two short teeth followed by another pair, etc.) or in other combinations. But it is good to make sure that the cultivated area around the plant is more like a small hill and not a pit, which is the inventive concept of the length set up of the teeth. Another option is that the length of the teeth varies in different combinations along the cultivator device.

According to an embodiment, the plurality of teeth of the cultivator device is a plurality of pins with a circular cross-section.

According to an embodiment, the plurality of teeth of the cultivator device is a plurality of flat bars with a rectangular cross-section. This provides more robust teeth which may last longer, and which not is that easy to bend.

One other alternative embodiment of the plurality of teeth may be a plurality of helical teeth (coil-spin-shaped), and of course, combinations of different kinds of teeth may also be possible, if this is wanted, like for example combinations of pins and flat bar teeth, pins and helical teeth or flat bar teeth in combination with helical teeth etc. Further, the lower "scratching" ends of the teeth (pins, flat bars, helical etc.) may be sharpened or not sharpened.

According to an embodiment of the flat bar configuration of the teeth, one or more tooth of the plurality of teeth of the cultivator device has an angle relative a rotational direction around the central longitudinal axis. By rotational direction is meant that when the planting preparation tool is rotated, each point of the tool gets a tangential direction, and the angle is relative this tangential direction. The flat bar teeth may all be angled or less than all be angled, and the meaning is that each tooth may "scratch" a greater width compared to for example a pin tooth or a not angled flat bar. The number of teeth to be angled as well as the angle is not limited but may be varied within the scope of the invention.

According to an embodiment, the second end of the planting preparation tool comprises a connector device arranged for connection to an arrangement able to cause a rotation of the planting preparation tool around the central longitudinal axis. Preferably this arrangement is a handheld motor-driven tool, arranged to be connected to the planting preparation tool. The connector device may be a screw, a quick connection of some kind (like a snap connection), bayonet or other types of connections suitable for this type of work.

According to an embodiment, the planting preparation tool further comprises a cover arranged between the soil preparation device and the second end of the planting preparation tool, preferably close to the soil preparation device. Preferably, the cover is removably attached to the planting preparation tool. The cover is arranged to protect a user from moving parts (of the cultivator device) as well as from spurting soil.

According to an embodiment, the cover is attached to the hub of the soil preparation device.

According to an embodiment, the at least one cultivator device of the soil preparation device is a disc which extends between the hub and the rim. Such a solution may function both as a cultivator which may include a bar, a knife, teeth etc. as well function as a cover.

Further possible features and benefits of this solution will become apparent from the detailed description below.

### Short description of the figures

The invention will now be described, by way of example, with reference to the accompanying figures in which:
Fig. 1a shows a side view of a planting preparation tool according to a first embodiment of the invention. Fig. 1b shows a view obliquely from above of the planting preparation tool of Fig.1a, Fig. 1c shows a view obliquely from below while Fig. 1d shows a view from below (from the underside of the planting preparation tool).
Figs. 2a-b show a side view and a view obliquely from above of a planting preparation tool according to a second embodiment.
Fig. 3 shows a view of the planting preparation tool of Fig. 2a with a cover mounted to it.

### Description of embodiments

In the following, a detailed description of a preferred embodiment of a planting preparation tool according to the invention is described with reference to the accompanying figures. The invention is not limited to the figures.

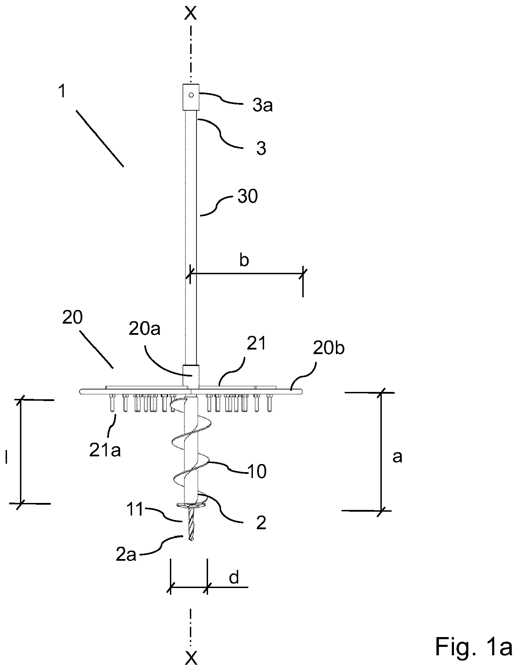

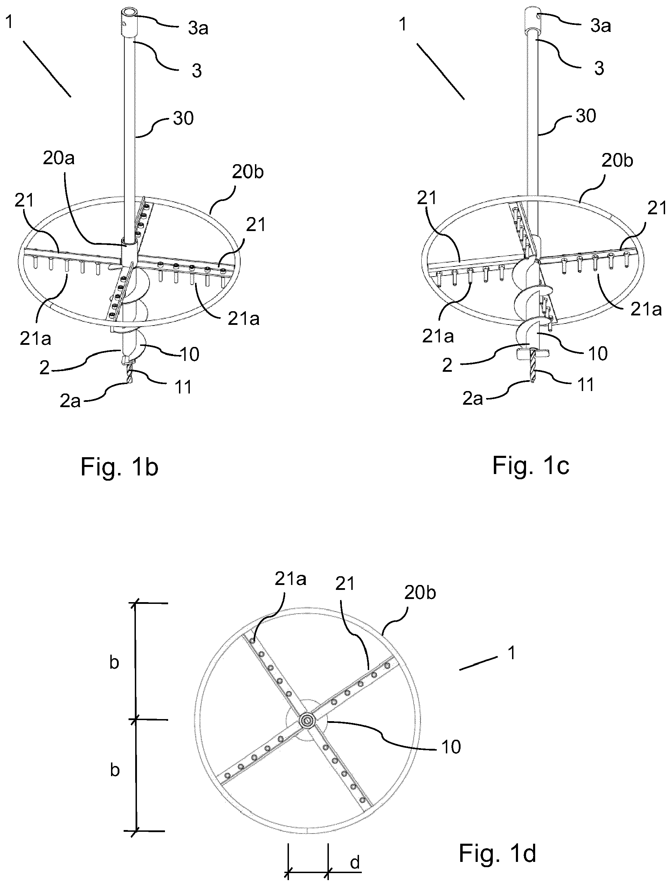

Fig. 1 shows a principal side view of a planting preparation tool 1, according to the invention. The planting preparation tool 1 is arranged for preparation of soil (not visible) at a planting area, and comprises a first end 2 and an opposite second end 3 and has an elongate extension between the first end 2 and second end 3 along a central longitudinal axis X. As understood when studying the figure, the first end 2 is intended to contact the soil at the planting area, which first end 2 by that may be called a lower end, referring to the use of the tool. The second end 3 comprises a connector device 3a and is arranged for connection to an arrangement able to cause a rotation of the planting preparation tool 1 around the central longitudinal axis X, such as a hand-held motor driven machine. The connector device 3a may be a screw connection, a quick connection of some kind (like a snap connection as in the presented embodiments), bayonet or other types of connections suitable for this type of work Thus, the second end may be called an upper end of the tool 1, referring to the use of the planting preparation tool 1.

In the preferred embodiment, the planting preparation tool 1 comprises three main parts, an elongate shaft 30 which extends between the first end 2 and the second end 3 of the planting preparation tool 1, a first drilling device 10 arranged at the first end 2 of the planting preparation tool 1, and a soil preparation device 20, which is arranged at the shaft 30, between the first drilling device 10 and the second end 3 of the planting preparation tool 1. Preferably, the first drilling device 10 and the soil preparation device 20 are fixed to the shaft 30 in a removable manner, such as providing a possibility to remove or replace these parts, which might be needed since these parts are worn during use of the planting preparation tool 1. The planting preparation tool 1 may have different sizes and combinations of different parts like the length and width of the shaft 30, the first drilling device 10, the soil preparation device 20, etc., to be suitable for different needs for different plant sizes etc.

The first drilling device 10, preferably is a kind similar with a "soil drill" or "ice drill" and has an extension I along the central longitudinal axis X from the first end 2 and in direction towards the second end 3 of the planting preparation tool 1. The extension I (length) of the first drilling device 10 may be adopted for different kinds of plants to be planted, where a small plant may need a shallow drill hole, while a large plant may need a deeper hole and thus a longer first drilling device 10. The drilling device 10 has a drilling diameter d referring to a perpendicular direction in relation to the central longitudinal axis X. The first drilling device 10 may be a standard ice/soil drill attached to the planting preparation tool 1, or a special drill designed for the purpose. The first drilling device 10 preferably is attached to the first end 2 by being removably arranged around the lower end of the shaft 30.

A mentioned above, the planting preparation tool 1 also comprises at least one soil preparation device 20, which is arranged at a first distance a from the first end 2 of the planting preparation tool 1. In the preferred embodiment, the first distance a, is such that at least the first drilling device 10 is arranged below the soil preparation device 20. The soil preparation device 20 extends a second distance b, out from the central longitudinal axis X, wherein the second distance b exceeds half the drilling diameter d of the first drilling device 10, i.e., exceeds the radius of the same. The soil preparation device 20 has a ring-shape and comprises a central hub 20a, which is arranged fixed to or removably fixed to the shaft 30, and further a rim 20b arranged at the second distance b from the central longitudinal axis X.

The soil preparation device 20 comprises at least one, preferably three or four, cultivator devices 21, which in the preferred embodiment each is an angled bar 21, on which a plurality of teeth 21a are arranged. The cultivator devices 21 extends between the hub 20a and the rim 20b of the soil preparation device 20. The cultivator devices 21 in the form of angled bars 21, with or without teeth 21a, are arranged for engagement with the soil surface at the plating area upon rotation of the planting preparation tool 1, but the angled bars 21 may also just function as a carrier of the plurality of teeth 21a, which main function is to cultivate the soil. The plurality of teeth 21a are arranged spaced apart along the cultivator device 21, along at least a part of the second distance b, between the hub 20a and the rim 20b and the plurality of teeth 21a protrudes downwards from the cultivator device 21 in the axial direction X, in direction towards the first end 2 of the planting preparation tool 1. The teeth 21a as well as the cultivator devices 21 may both have a cultivating function. In the embodiment of Fig. 1a-d, the planting preparation tool 1 comprises a plurality of teeth 21a in the form of a plurality of pins 21a with a circular cross-section.

According to the preferred embodiment, a second drilling device 11 is arranged at the first end 2 of the planting preparation tool 1, wherein the second drilling device 11 extends downwards from the first end 2, in direction away from the first drilling device 10 along the axial direction X, such as forming an outermost end 2a opposite the second end 3 of the planting preparation tool 1. The function of the second drilling device 11 is mainly to create a guiding/positioning of the first drilling device 10 and to indicate if any obstacles occur at the planting area.

Fig 1b-d shows different views of the above-described embodiment of the planting preparation tool 1. In the shown embodiment, the soil preparation device 20 comprises four cultivator devices 21 in the form of angled bars 21, extending between the hub 20a and the rim 20b of the soil preparation device 20, wherein each angled bar 21 is arranged with evenly spaced teeth 21a in the form pins 21a with a circular cross-section.

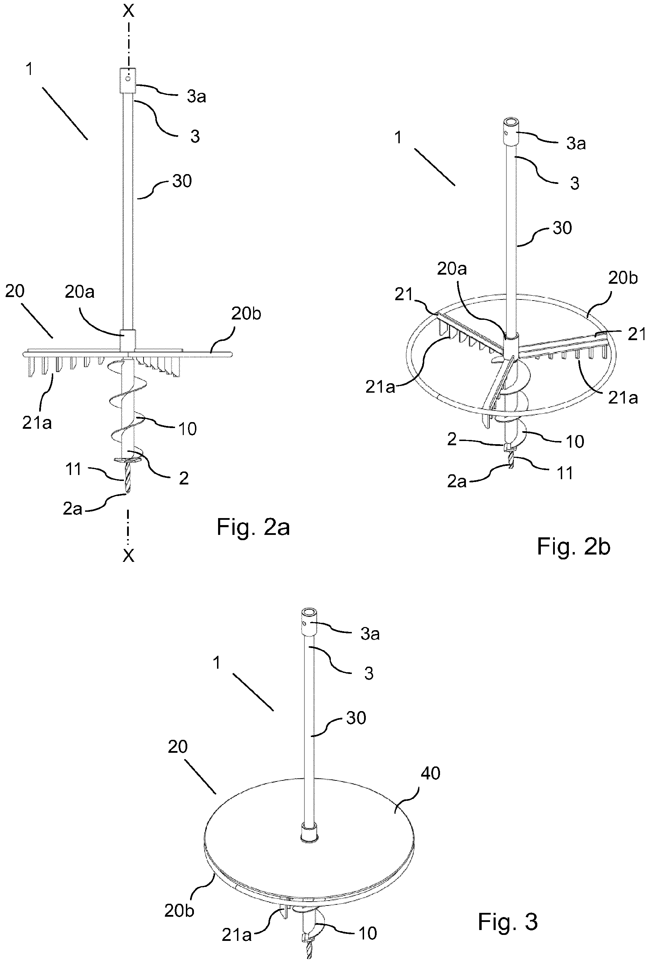

Figs. 2a-b show a side view and a view obliquely from above of a planting preparation tool 1 according to a second embodiment. This embodiment only differs from the above described first embodiment regarding the teeth 21a. In the same way as above, the cultivator devices 21 preferably are angled bars 21 which extends between the hub 20a and the rim 20b, but the plurality of teeth 21a of the cultivator device 21 is a plurality of flat bars 21a with a rectangular cross-section instead of pins with circular cross-section as in the first embodiment. This provides more robust teeth 21a which may last longer, and which not is that easy to be bend when hitting stones or other hard obstacles. In the embodiment of the planting preparation tool 1 of Figs. 2a-b, the plurality of teeth 21a are arranged with their longest side parallel with the rotation direction (that is perpendicular relative the central longitudinal axis X of rotation). One other option (not visible in the figures) is that in the flat bar configuration of the teeth 21a, one or more tooth 21a of the plurality of teeth 21a of the cultivator device 1, has an angle relative the rotational direction around the central longitudinal axis X. The flat bar teeth 21a may all be angled or less than all be angled, and the meaning with the angle relative the rotation direction is that each tooth 21a may "scratch" a greater width compared to for example a pin tooth or a not angled flat bar. The number of teeth 21a to be angled as well as the angle is not limited but may be varied within the scope of the invention.

Further, according to the embodiment the length of each tooth 21a of the plurality of teeth 21a increases in direction away from the central longitudinal axis X. This is to create a small hill-shape around the plant to avoid that the plant may be situated in a puddle of water during rain, which could be a problem if a lot of rain is falling over the planting site. Of course, the length of the individual teeth may just be varied along the cultivator device 21 to create other "patterns" or effects.

Fig. 3 shows a view obliquely from above of the planting preparation tool 1 of Fig. 2a with a cover 40 mounted to it. The cover 40 is arranged between the soil preparation device 20 and the second end 3 of the planting preparation tool 1, preferably close to the soil preparation device 20. Preferably, the cover 40 is removably attached to the planting preparation tool 1 for example by means of a screw or snap connection. The cover 40 is in this embodiment attached around the hub 20a of the soil preparation device 20 and is of course arranged to protect a user from moving parts (of the cultivator device 20, 21, 21a) as well as from spurting soil.

Another, not shown embodiment may be that the soil preparation device 20 is a disc which extends between the hub 20a and the rim 20b, which in that case may be very similar to using the cover 40 as the soil preparation device 20, wherein the soil preparation device 20 comprise a cultivator device 21 in the form of bars / angled bars 21 or not and/or a plurality of teeth 21a spread out over the underside of the disc 21, 40.

## Claims

1. A planting preparation tool (1) for preparation of soil at a planting area, the planting preparation tool (1) comprising a first end (2) and an opposite second end (3) and having an elongate extension between the first end (2) and second end (3) along a central longitudinal axis (X), wherein the first end (2) is intended to contact the soil at a planting area and the second end (3) is arranged for connection to an arrangement able to cause a rotation of the planting preparation tool (1) around the central longitudinal axis (X), the planting preparation tool (1) further comprising:
a first drilling device (10) arranged at the first end (2) of the planting preparation tool (1), wherein the first drilling device (10) has an extension (I) along the central longitudinal axis (X) from the first end (2) towards the second end (3) and a drilling diameter (d) perpendicular relative the central longitudinal axis (X),
at least one soil preparation device (20) arranged at a first distance (a) from the first end (2), such that at least a part of the first drilling device (10) is arranged between the first end (2) and the soil preparation device (20), wherein the soil preparation device (20) extends a second distance (b) out from the central longitudinal axis (X), wherein the second distance (b) exceeds half the drilling diameter (d) of the first drilling device (10), wherein the soil preparation device (20) comprises at least one cultivator device (21, 21a) arranged for engagement with at least the soil surface at the planting area upon rotation of the planting preparation tool (1).

2. Planting preparation tool (1) according to claim 1, wherein the soil preparation device (20) has a ring-shape and comprises a central hub (20a) arranged at the central longitudinal axis (X) and a rim (20b) arranged at the second distance (b) from the central longitudinal axis (X), wherein the at least one cultivator device (21) extends between the hub (20a) and the rim (20b).

3. Planting preparation tool (1) according to claim 1 or 2, wherein the cultivator device (21) of the soil preparation device (20) comprises a plurality of teeth (21a) arranged spaced apart along the cultivator device (21), along at least a part of the second distance (b) between the hub (20a) and the rim (20b), wherein the plurality of teeth (21a) protrudes from the cultivator device (21) in the axial direction (X), in direction towards the first end (2) of the planting preparation tool (1).

4. Planting preparation tool (1) according to any of the preceding claims, wherein a second drilling device (11) is arranged at the first end (2) of the planting preparation tool (1), wherein the second drilling device (11) extends from the first end (2) away from the first drilling device (10) along the axial direction (X), such as forming an outermost end (2a) opposite the second end (3) of the planting preparation tool (1).

5. Planting preparation tool (1) according to any of the preceding claims, wherein the planting preparation tool (1) further comprises an elongate shaft (30) which extends between the first end (2) and the second end (3) of the planting preparation tool (1), wherein the first drilling device (10) is arranged at the first end (2) of the shaft (30) and the soil preparation device (20) is arranged at the shaft (30) between the first drilling device (10) and the second end (3) of the planting preparation tool (1).

6. Planting preparation tool (1) according to any of claims 2 - 5, wherein the at least one cultivator device (21) of the soil preparation device (20) is a bar (21) which extends between the hub (20a) and the rim (20b).

7. Planting preparation tool (1) according to any of claims 3 - 6, wherein a length of each tooth (21a) of the plurality of teeth (21a) increases in direction away from the central longitudinal axis (X).

8. Planting preparation tool (1) according to any of claims 3 - 7, wherein the plurality of teeth (21a) of the cultivator device (21) is a plurality of pins (21a) with a circular cross-section.

9. Planting preparation tool (1) according to any of claims 3 - 7, wherein the plurality of teeth (21a) of the cultivator device (21) is a plurality of flat bars (21a) with a rectangular cross-section.

10. Planting preparation tool (1) according to claim 9, wherein one or more tooth (21a) of the plurality of teeth (21a) of the cultivator device (21) has an angle relative a rotational direction around the central longitudinal axis (X).

11. Planting preparation tool (1) according to any of the preceding claims, wherein the second end (3) of the planting preparation tool (1) comprises a connector device (3a) arranged for connection to an arrangement able to cause a rotation of the planting preparation tool (1) around the central longitudinal axis (X).

12. Planting preparation tool (1) according to any of the preceding claims, wherein the planting preparation tool (1) further comprises a cover (40) arranged between the soil preparation device (20) and the second end (3) of the planting preparation tool (1), preferably close to the soil preparation device (20).

13. Planting preparation tool (1) according to claim 12, wherein the cover (40) is attached to the hub (20a) of the soil preparation device (20).

14. Planting preparation tool (1) according to any of claims 2 - 5, wherein the at least one cultivator device (21) of the soil preparation device (20) is a disc which extends between the hub (20a) and the rim (20b).
